# EUROPÄISCHE PATENTSCHRIFT

(11) **EP 2 047 135 B1**
(45) Veröffentlichungstag und Bekanntmachung des Hinweises auf die Patenterteilung: **18.04.2012**
(21) Anmeldenummer: 07764405.2
(22) Anmeldetag: 28.06.2007
(51) Int. Cl.: F16D 69/02, C04B 35/83

(54) **REIBSYSTEM**
FRICTION SYSTEM
SYSTÈM DE FROTTEMENT

(30) Priorität: 21.07.2006 DE 102006033739
(43) Veröffentlichungstag der Anmeldung: 15.04.2009
(73) Patentinhaber: Schaeffler Technologies AG & Co. KG, 91074 Herzogenaurach (DE)
(72) Erfinder: GERBING, Tim-Florian, 57518 Betzdorf (DE); SPANDERN, Christian, 57578 Elkenroth (DE)
(86) Internationale Anmeldenummer: PCT/DE2007/001150
(87) Internationale Veröffentlichungsnummer: WO 2008/009261

(56) Entgegenhaltungen:
- EP-A- 0 554 902
- EP-A- 1 457 703
- EP-A- 1 459 861
- EP-A- 1 489 331
- US-A- 4 259 397

## Beschreibung

Die Erfindung betrifft ein Reibsystem, umfassend wenigstens zwei über Berührungsflächen zusammenwirkende Reibelemente, vorzugsweise für Kupplungen von Getrieben und/oder Radbremsen von Kraftfahrzeugen.

Die Übertragung von Drehmomenten leistungsstarker Brennkraftmaschinen an die Getriebe von Kraftfahrzeugen setzt voraus, dass die dafür entwickelten Kupplungen mit vor allem temperaturbeständigen und verschleißfesten Reibelemente versehen sind. Für diese Reibelemente werden Verbundwerkstoffe unterschiedlicher Gattung eingesetzt. Auch bei Reibelementen von Radbremsen für Kraftfahrzeuge werden ähnliche Werkstoffe angewandt, um die Bremsleistungen bei reduziertem Gewicht der als Reibelemente wirkenden Bremsscheiben zu verbessern.

Es ist bekannt, für Reibscheiben von Kupplungen für Getriebe und Radbremsen von Kraftfahrzeugen Hochleistungswerkstoffe einzusetzen, wie sie bspw. in der DE 44 38 456 A1 beschrieben sind. Diese Reibscheiben weisen Reibflächen auf, die aus einem kohlefaserverstärkten, porösen Kohlenstoffkörper gebildet sind, dessen Poren zumindest teilweise mit Siliziumkarbid gefüllt sind. Besagte Reibscheiben umfassen mindestens einen Kernkörper und mindestens einen mit diesem verbundenen Reibkörper. Beide sind auf einer einer Reibfläche der jeweiligen Reibscheibe abgekehrten Seite miteinander verbunden und über eine hochtemperaturbeständige Verbindungsschicht zusammengefügt.

In der DE 101 56 947 A1 wird eine Kupplung zwischen einer Brennkraftmaschine und einem Getriebe behandelt, die in der Weise ausgestaltet ist, dass sie bei räumlich günstigen Abmessungen und relativ geringem Verschleiß hohe Drehmomente überträgt. Dabei werden Reibelemente verwendet, die im Wesentlichen folgende Bestandteile umfassen: Messing, Eisen, Kupfer, Aluminium, eine siliziumreiche Phase, eine schwefelreiche Phase, Kohlenstoff und Phenolharzbinder. Diese Reibelemente besitzen einen hohen Reibwert und eine hohe thermische Stabilität.

Die EP 1 277 715 B1 befasst sich mit einem mehrschichtigen Keramik-Verbund, der mindestens einen eine Tragzone bildenden Verbundwerkstoff enthält. Letzterer besitzt oxidationsempfindliche Verstärkungsfasern und mindestens eine keramische Deckschicht. Mit der in diesem Schutzrechtszitat offenbarten Erfindung sind Keramik-Verbunde hervorgebracht, die sich als Brems- und Kupplungsscheiben für Kraftfahrzeuge eigenen.

Es ist Aufgabe der Erfindung ein Reibsystem mit zumindest einem Reibelement zu schaffen, das für den Einsatz bei Kupplungen und Radbremsen von Kraftfahrzeugen geeignet ist und sich durch Verschleißfestigkeit, Temperaturbeständigkeit und stabile Reibeigenschaften auszeichnet.

Nach der Erfindung wird diese Aufgabe durch die Merkmale des Anspruchs 1 gelöst. Weiter, die Erfindung ausgestaltende Merkmale sind in den nachfolgenden Ansprüchen enthalten.

Die mit der Erfindung hauptsächlich erzielten Vorteile sind darin zu sehen, dass das Reibelement des Reibsystems aufgrund der eingesetzten Rohstoffe, Verarbeitung zu einem Vorformling, anschließender Karbonisierung durch Pyrolyse und abschließender mechanischer Bearbeitung sich durch hohe Verschleißfestigkeit und Temperaturbeständigkeit sowie stabile Reibeigenschaften auszeichnet. Deshalb ist dieses Reibelement hervorragend geeignet anspruchsvollen Betriebsbelastungen bei Kupplungen, insbesondere Doppelkupplungen zwischen Brennkraftmaschine und Getriebe von Kraftfahrzeugen standzuhalten. Aber auch bei Radbremsen gerade von leistungsstarken Kraftfahrzeugen bietet sich der Einsatz des Reibelements dank seiner vorbildlichen Werkstoffzusammensetzung und Herstellungs- bzw. Bearbeitungsverfahren an. Die für das zu produzierende Reibelement verwendeten einzelnen Rohstoffe sind verfügbar und lassen sich problemlos mittels geeigneter Fertigungstechnologien - Mischen, Massepressverfahren und Härten - in einen Vorformling oder Grünling umsetzen. Die endgültige Temperaturbeständigkeit, Verschleißfähigkeit und stabilen Reibeigenschaften des Reibelements werden durch Karbonisierung des Vorformlings mittels Pyrolyse erreicht. Pyrolyse steht für die Bezeichnung einer thermischen Spaltung chemischer Verbindungen, wobei durch hohe Temperaturen ein Bindungsbruch innerhalb von großen Molekülen erzwungen wird. Dies geschieht unter Sauerstoffausschluss, um die Verbrennung zu verhindern. Um das Reibelement des Reibsystems mit seinen vorteilhaften Eigenschaften zu produzieren, eignen sich die Verfahrensmerkmale der Patentansprüche 11 bis 22.

In der Zeichnung werden Ausführungsbeispiele der Erfindung gezeigt, die nachstehend näher beschrieben sind.

Es zeigen
Fig. 1 eine schematische Ansicht von oben auf ein Kraftfahrzeug mit einer Brennkraftmaschine und einem Getriebe, zwischen denen eine Reibsysteme aufweisende Doppelkupplung wirksam ist,
Fig. 2 eine schematische Radbremse mit einem Reibsystem,
Fig. 3 ein Reibelement eines Reibsystems,
Fig. 4 einen Schnitt nach der Linie IV-IV der Fig. 3,
Fig. 5 eine Ansicht entsprechend Fig. 4,
Fig. 6 ein Flussdiagramm eines Herstellungsprozesses für ein Reibelement.

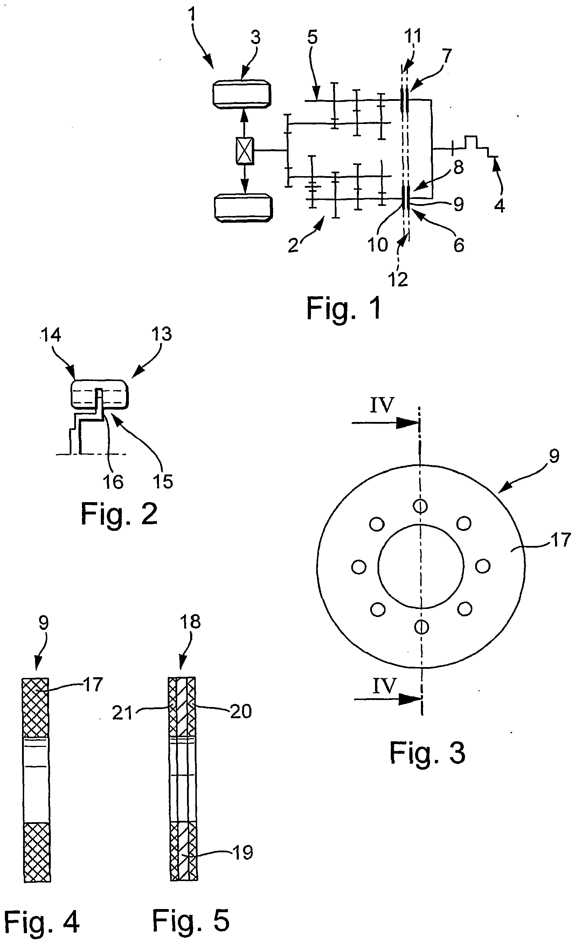

Ein Kraftfahrzeug 1 wird mittels eines Antriebsaggregats 2 über Räder 3 angetrieben - Fig. 1. Das Antriebsaggregat 2 umfasst eine Brennkraftmaschine 4 und ein Getriebe 5, das als Doppelkupplungsgetriebe ausgebildet ist und eine erste Kupplung 6 und eine zweite Kupplung 7 besitzt. Jede Kupplung z.B. 6 ist als Trockenkupplung ausgeführt und mit einem Reibsystem 8 versehen, das miteinander in Wirkverbindung stehende Reibelemente 9 und 10, aufweist.

Die Reibelemente 9 und 10 wirken an einander zugekehrten Berührungsflächen 11 und 12 zusammen.

In Fig. 2 ist eine Radbremse 13 dargestellt, die aus einer Bremszange 14 und mindestens einem Reibelement 15 besteht. Die Bremszange14 umfasst eine Bremsscheibe, die ein Reibelement 16 bildet.

Da die Reibelemente 9,10 und 15 funktionsähnlich sind, wird im Folgenden nur noch auf das Reibelement 9 Bezug genommen. Das Reibelement 9 ist durch Karbonisierung einer mit reibaktiven Substanzen und Festigkeit steigernden Fasern versetzten Kunststoffmatrix unter Sauerstoffausschluss und Erzeugung einer hochtemperaturfesten Reibmatrix mit stabilen Reibeigenschaften und hoher Verschleißfestigkeit hergestellt. Dabei ist das Reibelement 9 (Fig. 3, Fig. 4) eine Art rotationssymmetrische Ringscheibe 17, die gemäß Fig. 4 aus einem Stück hergestellt ist. Im Gegensatz dazu ist in Fig. 5 die Ringscheibe 18 mehrteilig gestaltet und umfasst eine Kernscheibe 19, die von Reibelementen 20 und 21 begrenzt wird. Die Reibelemente 20 und 21 sind werkstoffmäßig in etwa wie das Reibelement 9 aufgebaut und mit geeigneten Maßnahmen mit der Kernscheibe verbunden.

Zur Herstellung des Reibelementes 9 werden folgende Rohstoffe eingesetzt: Harz bspw. Novolakpulverharz, Schwerspat (Bariumsulfat), Flammruß, PAN (Polyacrylnitril) Faser, Glasfaser und Bronze. Diese Rohstoffe weisen nachstehende Funktionen auf:

| Rohstoff | Funktion |
|---|---|
| Novolakpulverharz | festigkeitsbildend |
| Schwerspat (Bariumsulfat) | Reibwertstabilisator (Oberflächenmodifikator) |
| Flammruß | Erhöhung Materialstabilität, Reibwertmodifikator (Schmierstoff) |
| Preoxidierte PAN Faser | Erhöhung Materialstabilität, Reibwertmodifikator |
| Glasfaser bspw. 3 mm | Erhöhung Materialstabilität, Reibwertmodifikator |
| Bronzepulver | Reibwertmodifikator (Adhäsivreibung) |

Die Bestandteile der Rohstoffe zur Herstellung des Reibelementes sind wie folgt verteilt:

| | |
|---|---|
| Novolakpulverharz | 20 vol % |
| Schwerspat | 20 vol % |
| Flammruß | 15 vol % |
| Preoxidierte PAN Fasern | 15 vol % |
| Glasfasern | 15 vol % |
| Bronzepulver | 15 vol % |

Die Länge der Glasfasern kann zwischen 1 mm und 5 mm betragen, wobei eine Länge von 3 mm besonders gut geeignet ist.

Zur Herstellung eignet sich ein Verfahren mit nachstehenden Schritten:
1. Verarbeitung der Bestandteile zu einer homogenen Mixtur.
2. Verarbeitung der Mixtur mit geeignetem Harzanteil nach einem definierten Pressverfahren zu einem Vorformling.
3. Vorhärtung des Vorformlings während des Pressverfahrens.
4. Die Temperatur beim Pressverfahren beträgt zwischen 120°C und 180°C, vorzugsweise 150°C.
5. Der Vorformling wird mittels eines Härteprozess behandelt.
6. Der Härteprozess des Vorformlings erfolgt bei Temperaturen zwischen 220°C und 280°C, vorzugsweise 250°C.
7. Der Vorformling wird mittels einer Karbonisierung behandelt.
8. Die Karbonisierung des Vorformlings erfolgt durch Pyrolyse.
9. Die Pyrolyse des Vorformlings erfolgt ab 350°C in inerter Atmosphäre.
10.Die Pyrolyse des Vorformlings erfolgt bei Temperaturen im Bereich von 400°C bis 600°C, wobei eine Umwandlung des Harzes, vorzugsweise Phenolharz in Kohlenstoff stattfindet.
11.Das durch Pyrolyse behandelte Reibelement wird durch definierte Bearbeitung z.B. Stanzen, Schneiden Bohren, Schleifen oder dgl. fertiggestellt.

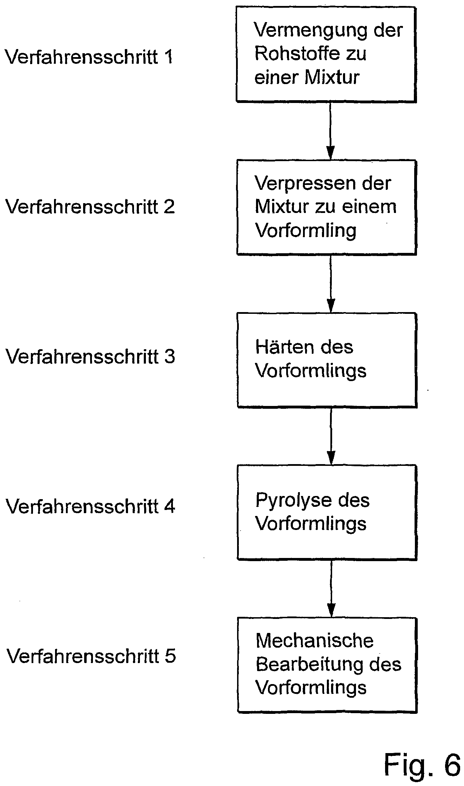

In Fig. 6 ist die Herstellung des Reibelements anhand von fünf Schritten dargestellt, bei denen wie nachstehend erläutert verfahren wird:
1. Vermengung der Rohstoffe durch eine geeignete Mischeinrichtung zu einer Mixtur,
2. Verpressen der Mixtur durch ein geeignetes Pressverfahren zu einem Vorformling,
3. Härten des Vorformlings bspw. in einem Umluft-Kammerofen,
4. Pyrolyse des Vorformlings,
5. Bearbeiten des hergestellten Reibelements z.B. mittels Stanzen, Schneiden, Bohren, Schleifen oder dgl.

## Patentansprüche

1. Reibsystem, umfassend wenigstens zwei über Berührungsflächen zusammenwirkende Reibelemente, vorzugsweise für Kupplungen von Getrieben und/oder Radbremsen von Kraftfahrzeugen, wovon zumindest ein Reibelement insgesamt oder bereichsweise aus einem Verbundwerkstoff mit hoher Verschleißfestigkeit und hoher Temperaturbeständigkeit besteht, **dadurch gekennzeichnet, dass** das Reibelement (9,10,15,20,21) durch Karbonisierung einer mit reibaktiven Substanzen und Festigkeit steigernden Fasern versetzten Kunststoffmatrix unter Sauerstoffausschluss zur Erzeugung einer hochtemperaturfesten Reibmatrix mit stabilen Reibeigenschaften und hoher Verscheißfestigkeit hergestellt ist, wobei die Rohstoffe zur Herstellung des Reibelements als Bestandteile wie folgt verteilt sind:
| | |
|---|---|
| Novolakpulverharz | ca. 20 vol % |
| Schwerspat | ca. 20 vol % |
| Flammruß | ca. 15 vol % |
| Preoxidierte PAN Faser | ca. 15 vol % |
| Glasfaser | ca. 15 vol % |
| Bronzepulver | ca. 15 vol % |

2. Reibsystem nach Anspruch 1, **dadurch gekennzeichnet, dass** das Reibelement (9) nach Art einer Ringscheibe (16) ausgeführt ist.

3. Reibsystem nach den Ansprüchen 1 und 2, **dadurch gekennzeichnet, dass** das Reibelement (9) der Ringscheibe (17) aus einem Stück hergestellt ist.

4. Reibsystem nach den Ansprüchen 1 und 2, **dadurch gekennzeichnet, dass** das Reibsystem der Ringscheibe (18) eine Kernscheibe (19) mit daran befestigten Reibelementen (20, 21) umfasst.

5. Reibsystem nach Anspruch 1, **dadurch gekennzeichnet, dass** die Glasfasern eine Länge von 1 bis 3 mm, vorzugsweise 3 mm aufweisen.

6. Verfahren zur Herstellung des Reibelements nach einem oder mehreren der vorangehenden Ansprüche, **dadurch gekennzeichnet, dass** die Bestandteile zu einer homogenen Mixtur verarbeitet werden.

7. Verfahren nach Anspruch 10, **dadurch gekennzeichnet, dass** die Mixtur mit geeignetem Harzanteil in einem Presswerkzeug nach einem definierten Pressverfahren zu einem Vorformling verarbeitet wird.

8. Verfahren nach Anspruch 11, **dadurch gekennzeichnet, dass** der Vorformling während des Pressverfahrens vorgehärtet wird.

9. Verfahren nach Anspruch 11, **dadurch gekennzeichnet, dass** die Temperatur beim Pressverfahren zwischen 120°C und 180°C, vorzugsweise 150°C beträgt.

10. Verfahren nach einem oder mehreren der vorangehenden Ansprüche, **dadurch gekennzeichnet, dass** der Vorformling mittels eines Härteprozess behandelt wird.

11. Verfahren nach Anspruch 14, **dadurch gekennzeichnet, dass** der Härteprozess des Vorformlings bei Temperaturen zwischen 220°C und 280°C, vorzugsweise 250°C erfolgt.

12. Verfahren nach einem oder mehreren der vorangehenden Ansprüche, **dadurch gekennzeichnet, dass** der Vorformling mittels Karbonisierung behandelt wird.

13. Verfahren nach Anspruch 16, **dadurch gekennzeichnet, dass** die Karbonisierung des Vorformlings durch Pyrolyse erfolgt.

14. Verfahren nach Anspruch 17, **dadurch gekennzeichnet, dass** die Pyrolyse ab 350°C in inerter Atmosphäre erfolgt.

15. Verfahren nach den Ansprüchen 17 und 18, **dadurch gekennzeichnet, dass** die Pyrolyse bei Temperaturen im Bereich von 400°C bis 600°C erfolgt und eine Umwandlung des Harzes, vorzugsweise Phenolharzes in Kohlenstoff bewirkt.

16. Verfahren nach einem oder mehreren der vorangehenden Ansprüche, **dadurch gekennzeichnet, dass** das durch Pyrolyse behandelte Reibelement durch definierte Bearbeitung z.B. Bohren, Schleifen oder dgl. fertig gestellt wird.

17. Verfahren zur Herstellung des Reibelements nach den Ansprüchen 1 bis 8, **gekennzeichnet durch** folgende Verfahrensschritte,
• Zusammensetzen der Rohstoffe **durch** eine geeignete Mischeinrichtung zu einer Mixtur,
• Dosieren und Verpressen der Mixtur **durch** ein geeignetes Pressverfahren zu einem Vorformling,
• Härten des Vorformlings in einem Umluft-Kammerofen,
• Pyrolyse des Vorformlings,
• Bearbeiten des hergestellten Reibelements z.B. mittels Stanzen, Schneiden, Bohren, Schleifen oder dgl.

## Claims

1. Friction system, comprising at least two friction elements which interact by way of contact surfaces, preferably for clutches of gearboxes and/or wheel brakes of motor vehicles, of which at least one friction element consists entirely or partially of a composite material with high wear resistance and high heat resistance, **characterized in that** the friction element (9, 10, 15, 20, 21) is produced by carbonizing a plastics matrix mixed with frictionally active substances and strength-increasing fibres, with the exclusion of oxygen, to produce a friction matrix which is resistant to high temperatures and has stable friction properties and high wear resistance, wherein the raw materials for producing the friction element are divided up as constituents as follows:
| | |
|---|---|
| novolak powder resin | approx. 20% by volume |
| barytes | approx. 20% by volume |
| lamp black | approx. 15% by volume |
| preoxidized PAN fibres | approx. 15% by volume |
| glass fibres | approx. 15% by volume |
| bronze powder | approx. 15% by volume. |

2. Friction system according to Claim 1, **characterized in that** the friction element (9) is formed in the manner of an annular disc (16).

3. Friction system according to Claims 1 and 2, **characterized in that** the friction element (9) of the annular disc (17) is produced from one piece.

4. Friction system according to Claims 1 and 2, **characterized in that** the friction system of the annular disc (18) comprises a core disc (19) with friction elements (20, 21) fastened thereto.

5. Friction system according to Claim 1, **characterized in that** the length of the glass fibres is 1 to 3 mm, preferably 3 mm.

6. Method for producing the friction element according to one or more of the preceding claims, **characterized in that** the constituents are processed to give a homogeneous mixture.

7. Method according to Claim 6, **characterized in that** the mixture, with a suitable resin content, is processed to give a preform in a press tool by a defined press-moulding process.

8. Method according to Claim 7, **characterized in that** the preform is precured during the press-moulding process.

9. Method according to Claim 7, **characterized in that** the temperature during the press-moulding process is between 120°C and 180°C, preferably 150°C.

10. Method according to one or more of the preceding claims, **characterized in that** the preform is treated by means of a curing process.

11. Method according to Claim 10, **characterized in that** the curing process for the preform is effected at temperatures of between 220°C and 280°C, preferably 250°C.

12. Method according to one or more of the preceding claims, **characterized in that** the preform is treated by means of carbonization.

13. Method according to Claim 12, **characterized in that** the preform is carbonized by pyrolysis.

14. Method according to Claim 13, **characterized in that** the pyrolysis is effected from 350°C in an inert atmosphere.

15. Method according to Claims 13 and 14, **characterized in that** the pyrolysis is effected at temperatures in the range from 400°C to 600°C and converts the resin, preferably phenolic resin, into carbon.

16. Method according to one or more of the preceding claims, **characterized in that** the friction element treated by pyrolysis is finished by defined machining, e.g. drilling, grinding or the like.

17. Method for producing the friction element according to Claims 1 to 4, **characterized by** the following method steps:
• the raw materials are brought together by a suitable mixing device to form a mixture,
• the mixture is metered and press-moulded by a suitable press-moulding process to give a preform,
• the preform is cured in a forced-air chamber kiln,
• the preform is pyrolysed,
• the friction element produced is machined, e.g. by means of stamping, cutting, drilling, grinding or the like.

## Revendications

1. Système de frottement comprenant au moins deux élément de frottement qui coopèrent par l'intermédiaire de surfaces de contact, de préférence pour embrayages de transmission et/ou freins de roues de véhicules automobiles, et dont au moins la totalité ou une partie d'un élément de frottement sont constituées d'un matériau composite présentant une haute tenue à l'usure et à la chaleur,
**caractérisé en ce que**
l'élément de frottement (9, 10, 15, 20, 21) est fabriqué en carbonisant en l'absence d'oxygène une matrice en matière synthétique contenant des substances à action de frottement mélangées à des fibres augmentant la résistance mécanique pour former une matrice de frottement réfractaire qui présente des propriétés de frottement stables et une haute résistance à l'usure, les matières premières utilisées comme composants pour la fabrication de l'élément de frottement se répartissant de la façon suivante :
| | |
|---|---|
| poudre de résine Novolak | env. 20 % vol. |
| baryte sulfatée | env. 20 % vol. |
| noir de carbone | env. 15 % vol. |
| fibres de PAN préoxydées | env. 15 % vol. |
| fibres de verre | env. 15 % vol. |
| poudre de bronze | env. 15 % vol. |

2. Système de frottement selon la revendication 1, **caractérisé en ce que** l'élément de frottement (9) est configuré en disque annulaire (16).

3. Système de frottement selon les revendications 1 et 2, **caractérisé en ce que** l'élément de frottement (9) du disque annulaire (17) est réalisé en une seule pièce.

4. Système de frottement selon les revendications 1 et 2, **caractérisé en ce que** le système de frottement du disque annulaire (18) comporte un disque d'âme (19) sur lequel sont fixés des éléments de frottement (20, 21).

5. Système de frottement selon la revendication 1, **caractérisé en ce que** les fibres de verre ont une longueur de 1 à 3 mm et de préférence de 3 mm.

6. Procédé de fabrication de l'élément de frottement selon l'une ou plusieurs des revendications précédentes, **caractérisé en ce que** les composants sont façonnés en un mélange homogène.

7. Procédé selon la revendication 6, **caractérisé en ce que** le mélange qui présente une teneur appropriée en résine est transformé en ébauche dans un outil de compression en suivant un procédé de compression défini.

8. Procédé selon la revendication 7, **caractérisé en ce que** l'ébauche est pré-durcie pendant l'opération de compression.

9. Procédé selon la revendication 7, **caractérisé en ce que** pendant l'opération de compression, la température est comprise entre 120°C et 180°C et est de préférence de 150°C.

10. Procédé selon l'une ou plusieurs des revendications précédentes, **caractérisé en ce que** l'ébauche est traitée dans une opération de durcissement.

11. Procédé selon la revendication 10, **caractérisé en ce que** l'opération de durcissement de l'ébauche s'effectue à une température comprise entre 220°C et 280°C et de préférence de 250°C.

12. Procédé selon l'une ou plusieurs des revendications précédentes, **caractérisé en ce que** l'ébauche est traitée par carbonisation.

13. Procédé selon la revendication 12, **caractérisé en ce que** la carbonisation de l'ébauche s'effectue par pyrolyse.

14. Procédé selon la revendication 13, **caractérisé en ce que** la pyrolyse s'effectue à partir de 350°C dans une atmosphère inerte.

15. Procédé selon les revendications 13 et 14, **caractérisé en ce que** la pyrolyse s'effectue à une température comprise dans la plage de 400°C à 600°C et a pour effet la conversion en carbone de la résine et de préférence d'une résine phénolique.

16. Procédé selon l'une ou plusieurs des revendications précédentes, **caractérisé en ce que** l'élément de frottement traité par pyrolyse reçoit un traitement de finition, par exemple par forage, meulage ou similaires.

17. Procédé de fabrication de l'élément de frottement selon les revendications 1 à 4, **caractérisé par** les étapes suivantes :
- façonnage de matières premières en un mélange à l'aide d'un dispositif de mélange approprié,
- dosage et compression du mélange en une ébauche grâce à une opération appropriée de compression,
- durcissement de l'ébauche dans un four à chambre et recirculation d'air,
- pyrolyse de l'ébauche et
- traitement de l'élément de frottement ainsi fabriqué, par exemple par estampage, découpe, forage, meulage ou similaires.
